# EUROPEAN PATENT SPECIFICATION

(11) **EP 4 175 856 B1**
(45) Date of publication and mention of the grant of the patent: **12.02.2025**
(21) Application number: 21737201.0
(22) Date of filing: 02.07.2021
(51) Int. Cl.: B60R 19/56

(54) **A VEHICLE**
FAHRZEUG
VÉHICULE

(30) Priority: 02.07.2020 NL 2025975
(43) Date of publication of application: 10.05.2023
(73) Proprietor: DAF Trucks N.V., 5643 TW Eindhoven (NL)
(72) Inventor: HAASNOOT, Floris Huig, 5643 TW Eindhoven (NL); SMEIJSTERS, Quint, 5643 TW Eindhoven (NL); VAN KNIPPENBERG, Ronald Antonius Johannes, 5643 TW Eindhoven (NL)
(74) Representative: V.O.
(86) International application number: PCT/NL2021/050422
(87) International publication number: WO 2022/005291

(56) References cited:
- WO-A1-2012/157437
- CN-U- 204 452 340
- JP-A- 2003 072 493

## Description

The invention relates to a vehicle, in particular a heavy goods vehicle, having a longitudinal direction, said vehicle being provided with a front underrun protection assembly provided at the front of the vehicle when seen in a normal forward direction of movement of the vehicle, said front underrun protection assembly comprising a cross beam extending transverse to the longitudinal direction of the vehicle and extending horizontally, said cross beam being connected to two parallel frame beams of the vehicle chassis via brackets, said parallel frame beams of the vehicle extending in the longitudinal direction, said front underrun protection assembly further comprising two couples of support elements for connection of the cross beam to the brackets, one couple of support elements being arranged for connection of the cross beam to a respective bracket, each couple of support elements including a horizontally extending outer support element connected to an end portion of the cross beam and extending obliquely from the cross beam and an inner support element connected to the cross beam and extending parallel to the longitudinal direction of the vehicle and horizontally.

Such a vehicle is for example known from WO19042554A1. In such a vehicle, in particular a heavy goods vehicle, the front underrun protection assembly is provided in order to prevent that in a possible head-on collision between such a heavy goods vehicle and a passenger car that the front section of the passenger car will run in under the front of the heavy goods vehicle and becomes wedged between the roadway and the underside of the front of the heavy goods vehicle. In the known vehicle as described in WO19042554A1 the inner and outer support elements are connected at different heights to the respective brackets. Document CN204452340U discloses a vehicle according to the preamble of claim 1. A large variety of front underrun protection assemblies exists, and there is still a need in the field on the one hand to provide a front underrun protections assembly that satisfies all the safety requirements while on the other hand to weight of such a front underrun protection assembly is reduced as much as possible to improve fuel economy of the vehicle. There is also a desire in the field to provide a front underrun protection assembly that can be constructed in a relatively simple mechanical manner.

According to the invention these desires can be at least partly met by providing a vehicle, in particular a heavy goods vehicle, having a longitudinal direction, said vehicle being provided with a front underrun protection assembly provided at the front of the vehicle when seen in a normal forward direction of movement of the vehicle, said front underrun protection assembly comprising a cross beam extending transverse to the longitudinal direction of the vehicle and extending horizontally, said cross beam being connected to two parallel frame beams of the vehicle chassis via brackets, said parallel frame beams of the vehicle extending in the longitudinal direction, said front underrun protection assembly further comprising two couples of support elements for connection of the cross beam to the brackets, one couple of support elements being arranged for connection of the cross beam to a respective bracket, each couple of support elements including a horizontally extending outer support element connected to an end portion of the cross beam and extending obliquely from the cross beam and an inner support element connected to the cross beam and extending parallel to the longitudinal direction of the vehicle and horizontally, wherein each couple of the support elements the inner support element comprises an outward side and a rearward end, the respective bracket being connected to a portion of the rearward end and the respective bracket having an outward part adjacent the rearward end of the inner support element, characterized in that the inner support element comprises a flange projecting rearwardly from the outward side, the flange extending along the outward part of the respective bracket, the outer support element being connected to the flange of the inner support element and a portion of the outward side of the inner support element adjacent the flange and wherein a space is present between the flange of the inner support element and the outward part of the respective bracket. By such a front underrun protection assembly during a collision the outer support element will move in rearward direction as a consequence thereof the flange will move inward, thereby closing the space, until the flange engages the outward part of the respective bracket and due to this contact collision forces will be transferred to the respective bracket. In this manner the forces of the collision are transferred by the outer support element to the respective bracket providing sufficient safety to the construction of the vehicle and without requiring additional components.

In an embodiment of a vehicle according to the invention the outer support element is welded to the flange of the inner support element and a portion of the outward side of the inner support element adjacent the flange. By welding the outer support element to the flange the forces can be transferred efficiently from the outer support element to the bracket. Although it is alternatively possible to e.g. use bolts for connecting the outer support element to the bracket, but in order to correctly transfer collision forces from the outer support element to the bracket such bolts need to satisfy specific requirement, which make the constructing relatively expensive, while in addition establishing a connection by means of bolts is more labor intensive then establishing the connection by means of welding.

In a further embodiment of a vehicle according to the invention the space has a dimension transverse to the longitudinal direction of the vehicle with a value of at most 4 mm, preferably the value is as low as possible taking assembly and manufacturing tolerances into account. A space with such a dimension, i.e. width, on the one hand can provide a front underrun protection assembly satisfying all the legal requirements and on the other hand allows tolerance in design and positioning of the bracket such that connection of the bracket to the longitudinal vehicle frames can be effected correctly.

The invention will be further explained with reference to the Figures, in which a non-limiting exemplary embodiment of a vehicle according to the invention is shown:
Fig. 1 schematically shows in perspective a part of a front underrun protection assembly, brackets and longitudinal frame beams of a vehicle according to the invention;
Fig. 2 schematically shows a top view of the part of the vehicle shown in Figure 1; and
Fig. 3 schematically shows an enlarged portion of Figure 2, depicting the connection of front underrun protection assembly to brackets.

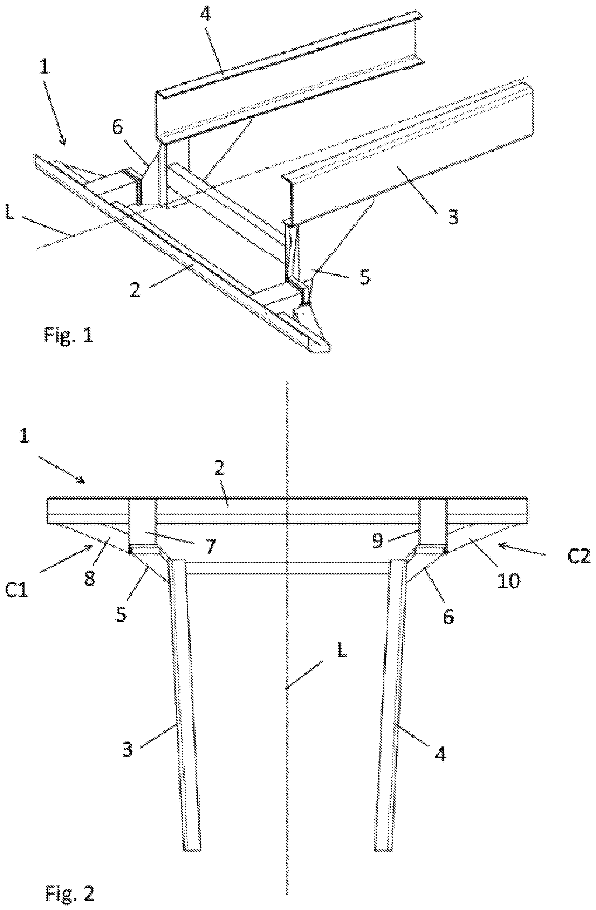

In Fig. 1 a part of a vehicle, in particular a heavy goods vehicle, is very schematically shown in perspective, while Figure 2 shows the same part in a top view. The vehicle has a longitudinal direction L and is provided with a front underrun protection assembly 1 provided at the front of the vehicle when seen in a normal forward direction of movement of the vehicle. The front underrun protection assembly 1 comprises a cross beam 2 extending transverse to the longitudinal direction L of the vehicle and extends horizontally. The cross beam 2 is connected to two parallel frame beams 3, 4 of the vehicle chassis via brackets 5, 6. The parallel frame beams 3, 4 of the vehicle extend in the longitudinal direction L.

The front underrun protection assembly 1 further comprises two couples C1, C2 of support elements 7, 8; 9, 10 for connection of the cross beam 2 to the brackets 5, 6. One couple of the support elements C1 (7, 8) is arranged for connection of the cross beam 2 to the respective bracket 5, and the other couple of support elements C2 (9, 10) is arranged for connection of the cross beam 2 to the respective bracket 6.

Each couple C1, C2 of support elements includes a horizontally extending outer support element 8; 10 connected to an end portion of the cross beam 2 and extending obliquely from the cross beam 2 towards the respective bracket 5; 6. Each couple C1, C2 of support elements further includes an inner support element 7; 9 connected to the cross beam 2 and extending parallel to the longitudinal direction L of the vehicle and horizontally. It is observed, that the expression "inner", "outer", "inwardly" and "outwardly" as used herein refer to the positioning relative to the longitudinal direction L.

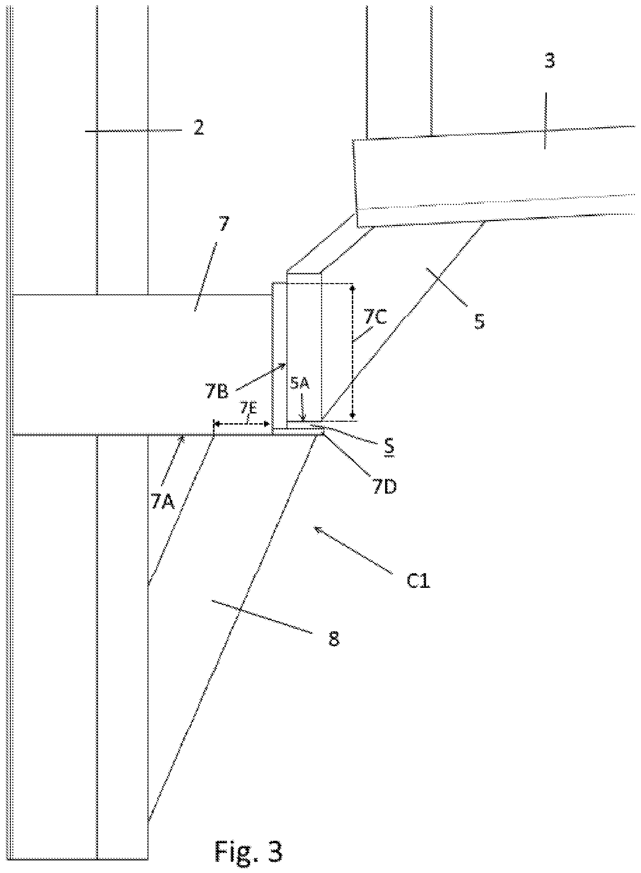

As is more clearly visible in Figure 3 the inner support element 7 of the left couple C1 of the support elements has an outward side 7A and a rearward end 7B. The bracket 5 is connected to a portion 7C of the rearward end 7B and has an outward part 5A adjacent the rearward end 7B of the inner support element 7. The inner support element 7 comprises a flange 7D projecting rearwardly from the outward side 7A and extends along the outward part 5A of the bracket 5. The flange 7D extends at a distance from the outward part 5A of the bracket 5, forming a space S between the flange 7D of the inner support element 7 and the outward part 5A of the bracket 5. The outer support element 8 is connected, preferably by welding, to the flange 7D of the inner support element 7 and a portion 7E of the outward side 7A of the inner support element 7 adjacent the flange 7D. The space S has a dimension transverse to the longitudinal direction L of the vehicle with a value of at most 4 mm. Preferably the dimension is as low as possible taking assembly and manufacturing tolerances into account.

During a collision the outer support element 8 will move in rearward direction as a consequence thereof the flange 7D will move inward, thereby closing the space S, until the flange 7D engages the outward part 5A of the bracket 5. Due to this contact collision forces will be transferred to the bracket 5.

Please note that the construction of the right couple C2 of the support elements is equivalent to the construction of the left couple C1.

## Claims

1. A vehicle, in particular a heavy goods vehicle, having a longitudinal direction (L), said vehicle being provided with a front underrun protection assembly (1) provided at the front of the vehicle when seen in a normal forward direction of movement of the vehicle, said front underrun protection assembly (1) comprising a cross beam (2) extending transverse to the longitudinal direction (L) of the vehicle and extending horizontally, said cross beam (2) being connected to two parallel frame beams (3, 4) of the vehicle chassis via brackets (5, 6), said parallel frame beams (3, 4) of the vehicle extending in the longitudinal direction (L), said front underrun protection assembly (1) further comprising two couples (C1; C2) of support elements (7, 8; 9, 10) for connection of the cross beam (2) to the brackets (5, 6), one couple (C1; C2) of support elements (7, 8; 9, 10) being arranged for connection of the cross beam (2) to a respective bracket (5, 6), each couple of support elements (7, 8; 9, 10) including a horizontally extending outer support element (8; 10) connected to an end portion of the cross beam (2) and extending obliquely from the cross beam (2) and an inner support element (7; 9) connected to the cross beam (2) and extending parallel to the longitudinal direction (L) of the vehicle and horizontally, wherein of each couple (C1; C2)of the support elements (7, 8; 9, 10) the inner support element (7; 9) comprises an outward side (7A) and a rearward end (7B), the respective bracket (5) being connected to a portion (7C) of the rearward end (7B) and the respective bracket (5) having an outward part (5A) adjacent the rearward end (7B) of the inner support element (7), **characterized in that** the inner support element (7) comprises a flange (7D) projecting rearwardly from the outward side (7A), the flange (7D) extending along the outward part (5A) of the respective bracket (5), the outer support element (8) being connected to the flange (7D) of the inner support element (7) and a portion (7E) of the outward side (7A) of the inner support element (7) adjacent the flange (7D) and wherein a space (S) is present between the flange (7D) of the inner support element (7) and the outward part (5A) of the respective bracket (5).

2. A vehicle according to claim 1, wherein the outer support element (10) is welded to the flange (7D) of the inner support element (7) and the portion (7E) of the outward side (7A) of the inner support element (7) adjacent the flange (7).

3. A vehicle according to claim 1 or 2, wherein the space (S) has a dimension transverse to the longitudinal direction (L) of the vehicle with a value of at most 4mm.

## Patentansprüche

1. Fahrzeug, insbesondere ein Schwerlastkraftwagen, mit einer Längsrichtung (L), wobei das Fahrzeug mit einer vorderen Unterfahrschutzbaugruppe (1) bereitgestellt ist, die bei Betrachtung in einer normalen Vorwärtsbewegungsrichtung des Fahrzeugs an der Vorderseite des Fahrzeugs bereitgestellt ist, wobei die vordere Unterfahrschutzbaugruppe (1) einen Querträger (2) umfasst, der sich quer zu der Längsrichtung (L) des Fahrzeugs erstreckt und sich horizontal erstreckt, wobei der Querträger (2) mit zwei parallelen Rahmenträgern (3, 4) des Fahrzeugchassis über Halterungen (5, 6) verbunden ist, wobei sich die parallelen Rahmenträger (3, 4) des Fahrzeugs in der Längsrichtung (L) erstrecken, wobei die vordere Unterfahrschutzbaugruppe (1) ferner zwei Paare (C1; C2) von Stützelementen (7, 8; 9, 10) zur Verbindung des Querträgers (2) mit den Halterungen (5, 6) umfasst, wobei ein Paar (C1; C2) von Stützelementen (7, 8; 9, 10) für die Verbindung des Querträgers (2) mit einer entsprechenden Halterung (5, 6) angeordnet ist, wobei jedes Paar von Stützelementen (7, 8; 9, 10) ein sich horizontal erstreckendes äußeres Stützelement (8; 10), das mit einem Endabschnitt des Querträgers (2) verbunden ist und sich schräg von dem Querträger (2) erstreckt, und ein inneres Stützelement (7; 9) enthält, das mit dem Querträger (2) verbunden ist und sich parallel zu der Längsrichtung (L) des Fahrzeugs und horizontal erstreckt,
wobei bei jedem Paar (C1; C2) der Stützelemente (7, 8; 9, 10) das innere Stützelement (7; 9) eine Außenseite (7A) und ein rückwärtiges Ende (7B) umfasst, wobei die jeweilige Halterung (5) mit einem Abschnitt (7C) des rückwärtigen Endes (7B) verbunden ist und die jeweilige Halterung (5) einen äußeren Teil (5A) angrenzend an das rückwärtige Ende (7B) des inneren Stützelements (7) aufweist,
**dadurch gekennzeichnet, dass** das innere Stützelement (7) einen Flansch (7D) umfasst, der von der Außenseite (7A) nach hinten vorsteht, wobei sich der Flansch (7D) entlang des äußeren Teils (5A) der jeweiligen Halterung (5) erstreckt, das äußere Stützelement (8) mit dem Flansch (7D) des inneren Stützelements (7) und einem Abschnitt (7E) der Außenseite (7A) des inneren Stützelements (7) benachbart zu dem Flansch (7D) verbunden ist und wobei ein Zwischenraum (S) zwischen dem Flansch (7D) des inneren Stützelements (7) und dem äußeren Teil (5A) der jeweiligen Halterung (5) vorhanden ist.

2. Fahrzeug nach Anspruch 1, wobei das äußere Stützelement (10) an den Flansch (7D) des inneren Stützelements (7) und den Abschnitt (7E) der Außenseite (7A) des inneren Stützelements (7) angrenzend an den Flansch (7) geschweißt ist.

3. Fahrzeug nach Anspruch 1 oder 2, wobei der Zwischenraum (S) eine Abmessung quer zu der Längsrichtung (L) des Fahrzeugs mit einem Wert von höchstens 4 mm aufweist.

## Revendications

1. Véhicule, en particulier véhicule de transport de marchandises lourdes, présentant une direction longitudinale (L), ledit véhicule étant doté d'un ensemble de protection anti-encastrement avant (1) fourni à l'avant du véhicule lorsqu'il est vu dans une direction de déplacement vers l'avant normale du véhicule, ledit ensemble de protection anti-encastrement avant (1) comprenant une poutre transversale (2) s'étendant transversalement à la direction longitudinale (L) du véhicule et s'étendant horizontalement, ladite poutre transversale (2) étant reliée à deux poutres de châssis parallèles (3, 4) du châssis du véhicule via des supports (5, 6), lesdites poutres de châssis parallèles (3, 4) du véhicule s'étendant dans la direction longitudinale (L), ledit ensemble de protection anti-encastrement avant (1) comprenant en outre deux couples (C1; C2) d'éléments de support (7, 8 ; 9, 10) pour la liaison de la poutre transversale (2) aux supports (5, 6), un couple (C1 ; C2) d'éléments de support (7, 8 ; 9, 10) étant agencé pour la liaison de la poutre transversale (2) à un support respectif (5, 6), chaque couple d'éléments de support (7, 8 ; 9, 10) incluant un élément de support extérieur s'étendant horizontalement (8 ; 10) relié à une partie d'extrémité de la poutre transversale (2) et s'étendant obliquement à partir de la poutre transversale (2), et un élément de support intérieur (7 ; 9) relié à la poutre transversale (2) et s'étendant parallèlement à la direction longitudinale (L) du véhicule et horizontalement, dans lequel dans chaque couple (C1 ; C2) des éléments de support (7, 8 ; 9, 10), l'élément de support intérieur (7 ; 9) comprend un côté extérieur (7A) et une extrémité arrière (7B), le support respectif (5) étant relié à une partie (7C) de l'extrémité arrière (7B) et le support respectif (5) présentant une partie extérieure (5A) adjacente à l'extrémité arrière (7B) de l'élément de support intérieur (7),
**caractérisé en ce que** l'élément de support intérieur (7) comprend une bride (7D) faisant saillie vers l'arrière à partir du côté extérieur (7A), la bride (7D) s'étendant le long de la partie extérieure (5A) du support respectif (5), l'élément de support extérieur (8) étant relié à la bride (7D) de l'élément de support intérieur (7) et une partie (7E) du côté extérieur (7A) de l'élément de support intérieur (7) adjacente à la bride (7D) et dans lequel un espace (S) est présent entre la bride (7D) de l'élément de support intérieur (7) et la partie extérieure (5A) du support respectif (5).

2. Véhicule selon la revendication 1, dans lequel l'élément de support extérieur (10) est soudé à la bride (7D) de l'élément de support intérieur (7) et à la partie (7E) du côté extérieur (7A) de l'élément de support intérieur (7) adjacente à la bride (7).

3. Véhicule selon la revendication 1 ou 2, dans lequel l'espace (S) présente une dimension transversale à la direction longitudinale (L) du véhicule avec une valeur d'au plus 4 mm.
